# EUROPÄISCHE PATENTANMELDUNG

(11) **EP 4 442 098 A1**
(43) Veröffentlichungstag der Anmeldung: **09.10.2024**
(21) Anmeldenummer: 23166836.9
(22) Anmeldetag: 05.04.2023
(51) Int. Cl.: A01D 34/14

(54) **SCHNEIDSYSTEM FÜR EIN SCHNEIDWERK**

(71) Anmelder: SMF - Holding GmbH, 57612 Eichelhardt (DE)
(72) Erfinder: Schmidt, Ralf, 57629 Mörsbach (DE); Otto, Sascha, 57612 Racksen (DE); Birkenbeul, Jens, 57610 Ingelbach (DE); Seyfarth, Judith, 57562 Herdorf (DE); Schellberg, Andreas, 53567 Asbach (DE)
(74) Vertreter: Neumann Müller Oberwalleney Patentanwälte PartG mbB

(57) **Zusammenfassung**

Schneidsystem für ein Schneidwerk einer Landmaschine umfasst einen Fingerbalken mit daran befestigten Mähfingern und ein Messer mit an einer Messerschiene befestigten Messerklingen, wobei das Messer relativ zu dem Fingerbalken hin- und hergehend geführt ist, wobei die Messerklingen eine Klingenteilung T aufweisen und wobei das Messer eine hin- und hergehende Bewegung mit einem Hub H ausführt.

## Beschreibung

Die Anmeldung betrifft ein Schneidsystem für ein Schneidwerk einer Landmaschine umfassend einen Fingerbalken mit daran befestigten Mähfingern, wobei die Mähfinger zueinander jeweils in einen Abstand A angeordnet sind, und ein Messer mit an einer Messerschiene befestigten Messerklingen, wobei das Messer relativ zu dem Fingerbalken hin- und hergehend geführt ist, wobei die Messerklingen eine Klingenteilung T aufweisen und wobei das Messer eine hin- und hergehende Bewegung mit einem Hub H ausführt.

Die US 6 510 681 B2 offenbart ein Schneidsystem mit an einer Messerschiene befestigten Messerklingen. Sichelförmige Schutzfinger stellen eine Schneidfläche für Messer während der horizontalen Hin- und Herbewegung bereit. Gemäß einer Ausführungsform des Schneidsystems ist eine Kombination aus einem Hub von viereinhalb Zoll, einem Abstand von drei Zoll der Schutzfinger und einem Abstand von zwei und einem Viertel Zoll der Messerklingen offenbart.

Bei dem Schneiden von Erntegut mit derartigen Schneidsystemen schieben die Messerklingen das Erntegut zunächst seitlich bis zu dem nächsten Mähfinger, an dem die Gegenschneide ausgebildet ist, um das Erntegut zu schneiden. Die Kombination der Klingenteilung T, dem Hub H des Messers und dem Abstand Ader Mähfinger hat neben weiteren Faktoren Einfluss auf die Leistung des Schneidsystems.

Eine Aufgabe kann darin bestehen, ein in Bezug auf die Klingenteilung T und den Hub H des Messers verbessertes Schneidsystem vorzuschlagen.

Die Aufgabe wird durch den Gegenstand von Anspruch 1 gelöst. In den Unteransprüchen sind Ausführungsformen angegeben.

Das Schneidsystem für ein Schneidwerk einer Landmaschine umfasst einen Fingerbalken mit daran befestigten Mähfingern und ein Messer mit an einer Messerschiene befestigten Messerklingen, wobei das Messer relativ zu dem Fingerbalken hin- und hergehend geführt ist, wobei die Messerklingen eine Klingenteilung T aufweisen und wobei das Messer eine hin- und hergehende Bewegung mit einem Hub H ausführt. Der Hub H mindestens dem eineinhalbfachen, also 1,5-fachen der Klingenteilung T entspricht. Die Klingenteilung T weist einen Wert zwischen 58,5 Millimeter und 63,5 Millimeter auf.

Die Mähfinger sind zueinander jeweils in einen Abstand A angeordnet. Gemäß einer Ausführungsform entspricht der Abstand A der Klingenteilung T. Der im Vergleich zum Stand der Technik geringe Abstand Ader Mähfinger reduziert die auf die Messerlänge bezogene, erreichbare Füllfläche, also die mit Erntegut füllbare Fläche zwischen den Messerklingen. Ebenfalls bezogen auf die Messerlänge wird eine erhöhte Anzahl von Schnitten ausgeführt, da je Hub zwei Schnitte erfolgen. Versuche mit unterschiedlichen Kombinationen von Klingenteilung T, Hub H des Messers und Abstand A der Mähfinger haben bei vergleichbarer Belastung eines Antriebs des Messers und vergleichbaren Eigenschaften des zu schneidenden Ernteguts gezeigt, dass bei der Klingenteilung T zwischen 58,5 Millimeter und 63,5 Millimeter besonders hohe Fahrgeschwindigkeiten der Erntemaschine, aufgrund der gestiegenen Leistung des Schnittsystems, erreicht werden können. Dies resultiert in einer erhöhten Hektarleistung, also der abgeernteten Fläche in Hektar pro Stunde, bei einem Schneidwerk gleicher Breite, oder in der Möglichkeit mit einem Vorsatz von geringerer Arbeitsbreite eine vergleichbare Flächenleistung wie mit Systemen nach dem Stand der Technik zu erreichen.

Gemäß einer Ausführungsform weist die Klingenteilung T einen Wert von etwa 61 Millimeter auf. Dieser Wert entspricht etwa 2,4 Zoll. Gängige Schneidwerke weisen eine Segmentierung in Segmente zu je fünf Fuß (5 ft) Länge in Längsrichtung auf. 60 Messerklingen mit der Klingenteilung T von 2,4 Zoll erstrecken sich vorteilhaft ebenfalls über eine Länge in Längsrichtung von fünf Fuß.

Der Hub H entspricht beispielsweise dem 1,9 - fachen bis 2,1 - fachen der Klingenteilung T. Bei einer Klingenteilung von 2,4 Zoll entspricht das einem Hub H zwischen 115,8 Millimeter und 128,0 Millimeter. Beispielsweise beträgt der Hub H 122,2 Millimeter oder dem zweifachen der Klingenteilung T. Der theoretische Wert des doppelten Hubes H gegenüber der Klingenteilung T für ein je Hub doppelt schneidendes Schneidsystem ist in der Praxis grundsätzlich nicht erforderlich, da der zweite Schnitt je Hub bereits vollständig abgeschlossen ist, sobald ein vorderes Ende der Schneide eine entsprechende Gegenschneide am Mähfinger passiert hat.

Gemäß einer weiteren Ausführungsform weist die Klingenteilung T einen Wert von etwa 61 Millimeter auf. Dieser Wert entspricht etwa 2,4 Zoll. Die Versuche haben bei dieser Klingenteilung den höchsten Wert der Hektarleistungen des Schneidwerks ergeben. Gemäß einer weiteren Ausführungsform weist die Klingenteilung T einen Wert von etwa 60,0 Millimeter auf.

Gemäß einer weiteren Ausführungsform weist das Messer bezogen auf seine Länge entlang einer Längsachse eine Masse M von weniger als 20 g/cm auf, insbesondere von weniger als 18 g/cm und besonders bevorzugt von etwa 15,85 g/cm, was 1,07 Pfund pro Fuß (lb/ft) entspricht. Zur Masse des Messers rechnen die Klingen, der Messerrücken und die Befestigungselemente zur Montage der Klingen an dem Messerrücken. Der zum Verbinden mit dem Antrieb vorgesehene Verbindungsabschnitt oder Messerkopf rechnet nicht zur Masse M des Messers bezogen auf seine Länge entlang der Längsachse.

Die Messerklingen weisen beispielsweise jeweils eine Mittellinie auf, wobei die Messerklingen entlang einer Längsachse des Schneidsystems nebeneinander angeordnet sind. Die Klingenteilung T kann dabei als ein Abstand zwischen den Mittellinien zweier benachbarter Messerklingen definiert sein. Die Mittellinien sind orthogonal zu der Längsachse und teilen die Messerklinge in zwei Hälften. Die Mähfinger können jeweils eine Fingerspitze aufweisen, wobei die Mähfinger entlang der Längsachse nebeneinander angeordnet sind. Der Abstand A kann als ein Abstand zwischen den Fingerspitzen definiert sein. Bei Mehrfachklingen sind mehrere Klingen einteilig ausgeführt, als sogenannte Doppelklinge oder Dreifachklinge. Mehrfachklingen weisen pro Messerspitze eine Mittellinie auf. Die Klingenteilung T bezieht sich auf die einzelnen Klingen, nicht auf die Mehrfachklinge insgesamt. Bei Mehrfachmähfingern sind mehrere Mähfinger einteilig ausgeführt, als sogenannte Doppelfinger oder Dreifachfinger. Mehrfachmähfinger weisen eine Messerspitze pro Mähfinger auf. Der Abstand A bezieht sich auf die einzelnen Mähfinger, nicht auf die Mehrfachmähfinger insgesamt. Gemäß einer weiteren Ausführungsform ist vorgesehen, dass ein Antrieb das Messer antreibt, wobei eine Drehzahl des Antriebs beispielsweise zwischen 450 und 750 Umdrehungen pro Minute beträgt und wobei das Messer je Umdrehung des Antriebs eine der hin und hergehenden Bewegungen mit dem Hub H ausführt. Die Drehzahl des Antriebs kann etwa 540 Umdrehungen pro Minute betragen, wobei das Messer dann etwa 1080 Hubbewegungen pro Minute ausführt. Insbesondere beim Grasschnitt kann die Drehzahl des Antriebs etwa 700 bis 750 Umdrehungen pro Minute betragen.

Gemäß einer weiteren Ausführungsform ist vorgesehen, dass eine Belastung des Antriebs durch eine Fliehkraft des Messers bei einer Drehzahl des Antriebs von 540 Umdrehungen pro Minute kleiner oder gleich der Belastung des Antriebs durch die Fliehkraft eines Referenzmessers eines Referenzschneidsystems bei einer Drehzahl des Antriebs von 600 Umdrehungen pro Minute ist. Allgemeiner kann die Drehzahl des Antriebs 90 Prozent der Drehzahl des Antriebs des Referenzschneidsystems betragen. Das Referenzschneidsystem weist dabei folgende Parameter auf:
- eine Klingenteilung Tref von 76,2 Millimeter oder 3 Zoll,
- ein Abstand Aref der Mähfinger, der der Klingenteilung Tref entspricht,
- ein Hub Href von 84,6 Millimeter oder 3,33 Zoll.

Das Referenzmesser weist bezogen auf seine Länge entlang der Längsachse eine Masse Mref von mindestens 21 g/cm auf. Insbesondere kann die Masse Mref 22,33 g/cm oder 1,5 Pfund pro Fuß (lb/ft) betragen. Die Belastung des Antriebs ist als eine theoretische Belastung durch eine Fliehkraft des jeweiligen Messers im Leerlauf, also ohne, dass Erntegut geschnitten wird und ohne Berücksichtigung von Reibung zu verstehen. Die Belastung ist auf die Länge des Messers in der Längsrichtung bezogen und beträgt für das Referenzmesser beispielsweise 3,73 N/cm bzw. 113,69 Newton pro Fuß (N/ft).

Gemäß einer weiteren Ausführungsform ist vorgesehen, dass die Mähfinger aus einem Blechmaterial hergestellt sind. Der Mähfinger kann einen Klingenspalt aufweisen, der Gegenschneiden für die Messerklingen bildet. Im Vergleich zu einem geschmiedeten Finger entfällt bei dem aus Blechmaterial hergestellten Mähfinger mit Klingenspalt der Niederhalter. Gemäß einer weiteren Ausführungsform können die Mähfinger in mindestens zwei Varianten unterschiedlicher Fingerlänge in Arbeitsrichtung vorgesehen sein. Die Mähfinger der kürzeren Variante oder sämtliche Mähfinger können an der Messerspitze offen ausgeführt sein, wobei die Messerspitzen den Mähfinger überragen können.

Die Messerklingen weisen eine Oberseite und eine Unterseite auf. Eine Oberfläche der Unterseite kann aus einer in einer Ebene angeordneten Planfläche und einem oberhalb der Ebene verlaufenden Aussparungsbereich zusammengesetzt sein, wobei eine Höhe der Messerklinge einem maximalen Abstand zwischen der Oberseite und der Planfläche in einer Normalenrichtung zu der Ebene entspricht. Eine Materialstärke der Messerklinge kann zumindest bereichsweise geringer sein als die Höhe der Messerklinge, wobei die Materialstärke der Messerklinge einem Abstand zwischen der Oberseite und der Unterseite entspricht. Die Messerklingen können dadurch vorteilhaft mit verminderter Masse bei gleicher Höhe der Messerklinge hergestellt werden.

Gemäß einer weiteren Ausführungsform ist vorgesehen, dass die Messerklingen an der Messerschiene sowohl mit der Messerschiene zugewandter Oberseite als auch mit der Messerschiene zugewandter Unterseite befestigbar sind

Eine Oberfläche der Oberseite kann beispielsweise aus einer in einer oberen Ebene angeordneten oberen Planfläche und einem außerhalb der oberen Ebene verlaufenden Oberseitenbereich zusammengesetzt sein. Die an eine Hinterkante der jeweiligen Messerklinge angrenzende Oberfläche der Oberseite kann zumindest abschnittsweise durch die obere Planfläche gebildet sein. Dadurch liegt die Oberfläche der Oberseite vorteilhaft mit einem Teil der oberen Planfläche an der Messerschiene an. Die Messerklingen können an der Messerschiene im Wechsel mit der Messerschiene zugewandter Oberseite und mit der Messerschiene zugewandter Unterseite befestigt sein.

Gemäß einer weiteren Ausführungsform ist vorgesehen, dass die Messerklingen einen Klingenwinkel zwischen 20° und 27° aufweisen. Der Klingenwinkel entspricht einem Halbwinkel des durch die Klingenspitze gebildeten Winkels. Eine Senkrechte zu der Längsachse in einer Ebene der Messerklinge und eine Gerade entlang einer Schneidkante der Messerklinge schließen den Klingenwinkel ein. Der Klingenwinkel beträgt beispielsweise 21°. Des Weiteren können die Messerklingen abschnittsweise eine ersten Klingenwinkel und abschnittsweise einen von dem ersten Klingenwinkel verschiedenen zweiten Klingenwinkel aufweisen, wobei der Übergang der Abschnitte diskontinuierlich an einer Knickstelle vorgesehen sein kann. Alternativ kann der Übergang der Abschnitte graduell gestaltet sein, so dass sich zumindest im Bereich eines Übergangsabschnitts ein gebogener Verlauf der Schneide ergibt.

Gemäß einer weiteren Ausführungsform ist vorgesehen, dass die Messerklingen zwei Schneidfasen aufweisen, wobei eine der Schneidfasen auf der Oberseite und die andere Schneidfase auf der Unterseite angeordnet ist. Die Schneidfasen können sich im Bereich einer Messerspitze insbesondere vollständig überlappen. Da die Schneidfasen auf unterschiedlichen Seiten der Messerklinge angeordnet sind, wird die Überlappung ermöglicht. Durch die Überlappung ergibt sich vorteilhaft eine weniger breite Messerspitze und bei gleichem Klingenwinkel eine größere Länge des Schneidenabschnitts in Arbeitsrichtung der Messerklinge. Das Messer kann Messerklingen in mindestens zwei Varianten unterschiedlicher Länge des Schneidenabschnitts in Arbeitsrichtung und/oder unterschiedlicher Klingenwinkel aufweisen.

Nachfolgend werden beispielhaft Ausführungsformen mit Bezug auf die beiliegenden Zeichnungen beschrieben. Die Ausführungen schränken den allgemeinen Erfindungsgedanken nicht ein.

Es zeigen
Figur 1 eine Teilansicht eines Schneidsystems gemäß einer Ausführungsform;
Figur 2 eine Seitenansicht des Schneidsystem gemäß Figur 1;
Figur 3 eine Teilansicht eines Messers des Schneidsystems gemäß Figur 1;
Figur 4 eine Teilansicht eines Schneidsystems gemäß einer weiteren Ausführungsform;
Figur 5 eine Teilansicht eines Messers des Schneidsystems gemäß Figur 4;
Figur 6 eine Teilansicht eines nicht beanspruchten Referenzschneidsystems;
Figuren 7 bis 11 eine Messerklinge für das Schneidsystem in verschiedenen Ansichten;
Figuren 12 und 13 eine Variante der Messerklinge in verschiedenen Ansichten;
Figuren 14 und 15 eine weitere Variante der Messerklinge in verschiedenen Ansichten;
Figuren 16 bis 18 eine weitere Variante der Messerklinge in verschiedenen Ansichten;
Figur 19 eine vergleichende Darstellung von Varianten der Messerklingen gemäß Figuren 12, 14 und 16;
Figur 20 ein Diagramm zur vergleichenden Darstellung erreichbarer Fahrgeschwindigkeiten mit den Varianten der Messerklingen gemäß Figur 19;
Figur 21 ein weiteres Diagramm zur vergleichenden Darstellung erreichbarer Fahrgeschwindigkeiten mit den Varianten der Messerklingen gemäß Figur 19.

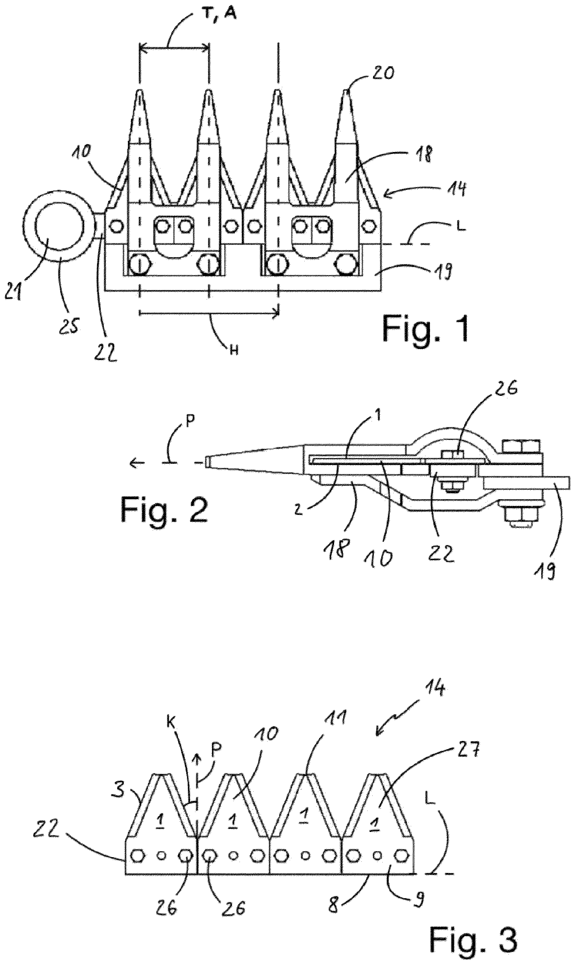

Die Figur 1 zeigt ein Ausführungsbeispiel eines Schneidsystems für ein Schneidwerk einer Landmaschine in einer schematischen Teildarstellung. Die Figur 2 zeigt das Schneidwerk in einer Seitenansicht. In der Figur 3 ist ein Messer 14 des Schneidwerks als Detail dargestellt. Die Figuren 1 bis 3 werden nachfolgend gemeinsam beschrieben. Das Schneidsystem umfasst einen Fingerbalken 19 mit daran befestigten Mähfingern 18, wobei die Mähfinger 18 zueinander jeweils in einen Abstand A angeordnet sind, und das Messer 14 mit an einer Messerschiene 22 befestigten Messerklingen 10, wobei das Messer 14 relativ zu dem Fingerbalken 19 hin- und hergehend geführt ist, wobei die Messerklingen 10 eine Klingenteilung T aufweisen und wobei das Messer 14 eine hin- und hergehende Bewegung mit einem Hub H ausführt. Der Abstand A kann der Klingenteilung T entsprechen, während der Hub H etwa dem zweifachen der Klingenteilung T entspricht, was auch als Doppelhub bezeichnet werden kann. Die Klingenteilung T weist einen Wert zwischen 58,5 Millimeter und 63,5 Millimeter auf.

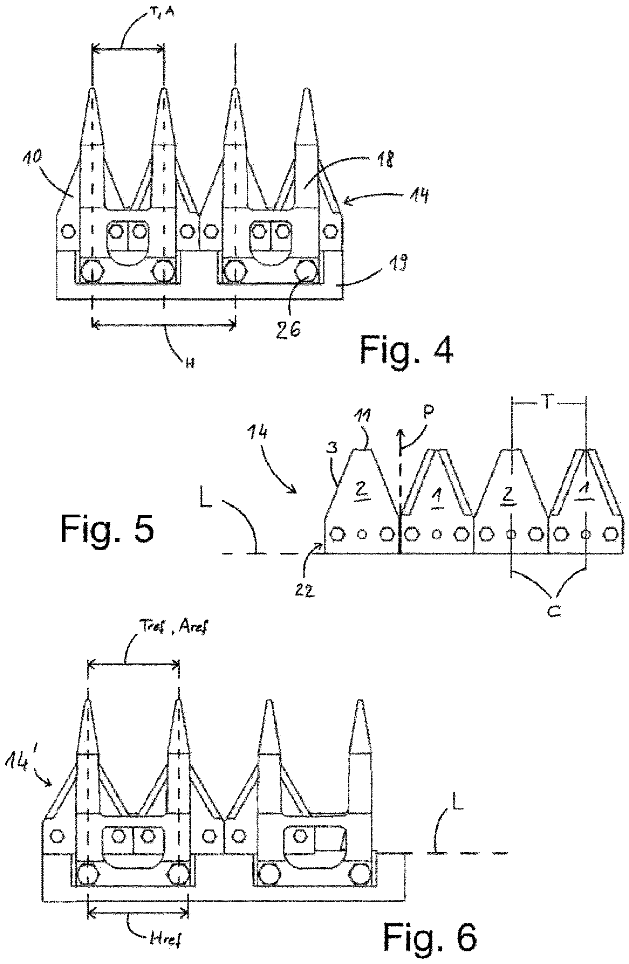

Die Messerklingen 10 weisen jeweils eine Messerspitze 11 auf, wobei die Messerklingen 10 entlang einer Längsachse L nebeneinander angeordnet sind. Die Klingenteilung T ist als ein Abstand zwischen zur Längsachse L orthogonalen Mittellinien C zweier benachbarter Messerklingen 10 definiert, vgl. Figur 5. Die Mähfinger 18 weisen jeweils eine Fingerspitze 20 auf, wobei die Mähfinger 18 entlang der Längsachse L nebeneinander angeordnet sind und wobei der Abstand A als ein Abstand zwischen den Fingerspitzen definiert ist. Ein Antrieb 21 kann das Messer 14 antreiben, wobei eine Drehzahl des Antriebs 21 zwischen 450 und 750 Umdrehungen pro Minute beträgt und wobei das Messer 14 je Umdrehung des Antriebs eine der hin und hergehenden Bewegungen mit dem Hub H ausführt. Die Drehzahl des Antriebs 21 kann beispielsweise 540 Umdrehungen pro Minute betragen.

Das Messer 14 umfasst beispielsweise eine Messerschiene 22, die nachfolgend auch als Messerrücken 22 bezeichnet wird. An der Messerschiene 22 ist eine Vielzahl der Messerklingen 10 befestigt. Die Messerklingen 10 sind an dem Messerrücken 22 nebeneinander entlang der Längsachse L angeordnet und befestigt. Der Messerrücken 22 ist mit einem Verbindungsabschnitt 25 verbunden. Der Verbindungsabschnitt 25 dient zum Koppeln des Messers 14 an den Messerantrieb 21 zum Hin- und Herbewegen des Messers 14 entlang der Längsachse L. Die Messerklingen 10 können jeweils über eine und/oder mehrere Befestigungselemente 26, wie Schrauben und/oder Muttern mit dem Messerrücken 22 verbunden sein. Dem Fachmann sind weitere Möglichkeiten der Befestigung des Messers 14 bekannt.

Die Messerklingen 10 weisen jeweils einen Schneidenabschnitt 27 und einen Befestigungsbereich 9 mit einer Hinterkante 8 auf, die entlang einer Arbeitsrichtung P aufeinander folgend angeordnet sind. Eine Arbeitsrichtung P ist senkrecht zur Längsachse L ausgerichtet und entspricht beispielsweise einer Fahrtrichtung einer landwirtschaftlichen Maschine. In der Arbeitsrichtung P betrachtet stehen die Schneidenabschnitte 27 der Messerklingen 10 nach vorne von dem Messerrücken 22 vor. Über den Befestigungsbereich 9 sind die Messerklingen 10 jeweils in Anlage zum Messerrücken 22 angeordnet. Die Hinterkanten 8 der Messerklingen 10 können in Arbeitsrichtung P nach hinten über den Messerrücken 22 vorstehen. An dem Schneidenabschnitt 27 der jeweiligen Messerklinge 10 sind Schneiden 3 ausgebildet und winklig derart zueinander ausgerichtet, dass sie in Arbeitsrichtung P spitz zulaufen. Eine Gerade entlang der Schneide 3 schließt mit der Arbeitsrichtung P einen Klingenwinkel K zwischen 20 Grad und 27 Grad, insbesondere von etwa 21 Grad, ein.

Die Messerklingen 10 sind in der dargestellten Ausführungsform alle gleich ausgerichtet, nämlich mit einer Unterseite 2 dem Messerrücken 22 zugewandt. Alle Oberseiten 1 der Messerklingen 10 sind dem Messerrücken 22 abgewandt.

In der Figur 4 ist eine schematische Teilansicht des Schneidsystems gemäß einer weiteren Ausführungsform dargestellt. Die Figur 5 zeigt das Messer 14 des Schneidsystems gemäß Figur 4. Die Figuren 4 und 5 werden gemeinsam beschrieben. In der Figur 5 ist die Klingenteilung T als der Abstand zwischen den zur Längsachse L orthogonalen Mittellinien C zweier benachbarter Messerklingen 10 angegeben. Der Aufbau entspricht weitgehend der Ausführungsform gemäß Figur 1 und wird nicht erneut beschrieben. Gleiche Bauteile sind mit identischen Bezugszeichen versehen. Die dargestellte Ausführungsform unterscheidet sich in der Anordnung der Messerklingen 10. Diese sind wechselseitig an dem Messerrücken 22 angeordnet. Abwechselnd ist die Oberseite 1 und die Unterseite 2 dem Messerrücken 22 zugewandt.

In der Figur 6 ist schematisch ein Referenzschneidsystem dargestellt, das nicht beansprucht wird. Das Referenzschneidsystem weist dabei folgende Parameter auf:
- eine Klingenteilung Tref von 76,2 Millimeter oder 3 Zoll,
- ein Abstand Aref der Mähfinger, der der Klingenteilung Tref entspricht,
- ein Hub Href von 84,6 Millimeter oder 3,33 Zoll. Das Referenzmesser 14' weist bezogen auf seine Länge entlang der Längsachse L eine Masse Mref von mindestens 21 g/cm auf. Insbesondere kann die Masse Mref 22,33 g/cm oder 1,5 Pfund pro Fuß (lb/ft) betragen.

Eine Belastung des Antriebs 21 der Ausführungsformen gemäß der Figuren 1 und 4 durch eine Fliehkraft des jeweiligen Messers 14 ist bei einer Drehzahl des Antriebs 21 von 540 Umdrehungen pro Minute kleiner oder gleich der Belastung des Antriebs durch die Fliehkraft eines Referenzmessers 14' des Referenzschneidsystems gemäß Figur 6 bei einer Drehzahl des Antriebs von 600 Umdrehungen pro Minute.

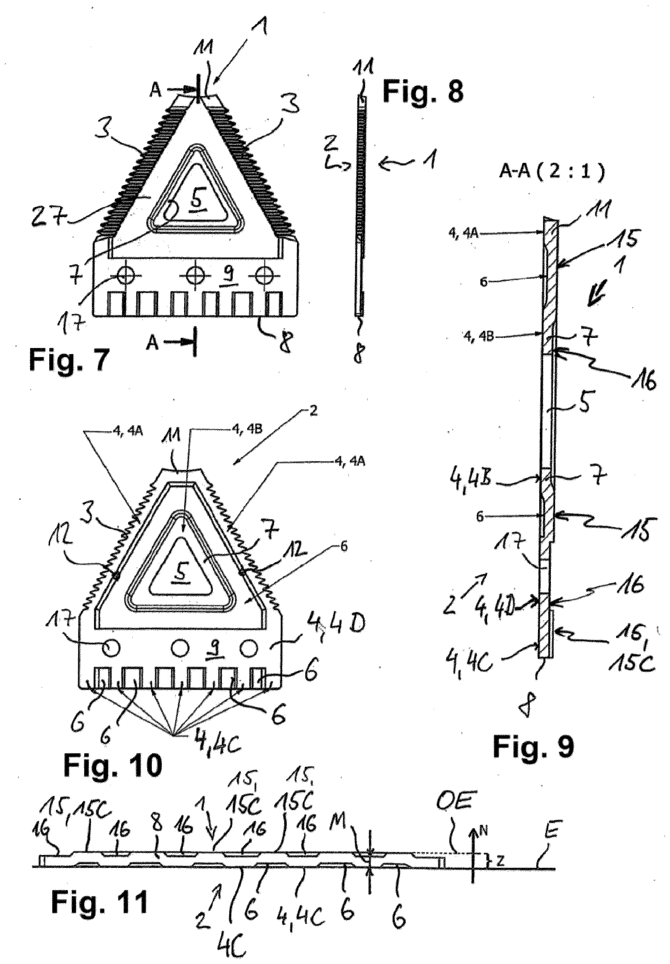

Die Figuren 7 bis 11 zeigen eine andere beispielhafte Messerklinge 10 in verschiedenen Ansichten. In der Figur 7 ist die Messerklinge 10 in einer Ansicht auf eine Oberseite 1 dargestellt. In der Figur 8 ist die Messerklinge aus Figur 3 in einer um 90 Grad gedrehten Ansicht von der Seite dargestellt, in der die Lage der Messerspitze 11 vorn und der Hinterkante 8 hinten, sowie die insgesamt flache Form der Messerklinge 10 mit der Oberseite 1 und einer Unterseite 2 erkennbar sind. In der Figur 9 ist ein Schnitt entlang der Linie A-A aus Figur 7 in zweifacher Vergrößerung dargestellt. Die Figur 10 zeigt eine Ansicht auf die Unterseite 2 der Messerklinge 10 und die Figur 11 zeigt wiederum eine gegenüber der Figur 7 um 90 Grad gedrehte Ansicht auf die Hinterkante 8 in einer vergrößerten Darstellung.

Nachfolgend wird auf die Figuren 7 bis 11 gemeinsam Bezug genommen. Die Messerklinge 10 weist zwei Schneiden 3 zum Schneiden von Erntegut auf, deren jeweils äußerer Rand eine Schneidkante bildet. An der im Ausführungsbeispiel eher stumpf geformt Messerspitze 11 laufen die Schneiden 3 annähernd zusammen und bilden so die in etwa dreieckförmige Gestalt des vorderen Teils der Messerklinge 10. Dieser Teil der Messerklinge 10 weist eine etwa dreieckförmige Ausnehmung 5 mit einem umlaufenden Randbereich 7 auf. Die Bewegungsrichtung des Messers 14 mit der Messerklinge 10 zum Schneiden des Ernteguts ist quer zu der Arbeitsrichtung P (Figur 2), insbesondere in etwa rechtwinklig dazu, in Einbaulage horizontal oder leicht angewinkelt, was der Zeichenebene in Figur 3 entspricht. An den etwa dreieckförmigen Schneidenabschnitt 27 der Messerklinge 10 schließt sich der in der Ansicht etwa rechteckförmiger Befestigungsbereich 9 an, welcher mit der Hinterkante 8 abschließt. Der Befestigungsbereich 9 weist Befestigungsmittel 17 zur Montage der Messerklinge 10 auf, welche an dem Messerbalken (22, Figur 1) montiert wird.

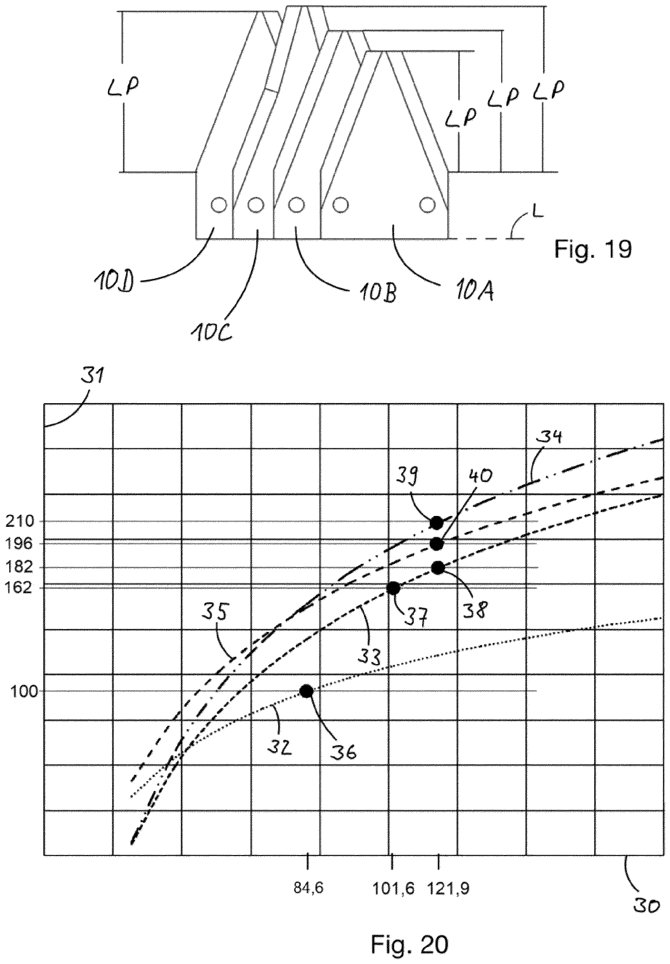

Die Oberfläche der Unterseite 2 ist aus einer in der Ebene E (vgl. Figur 7) angeordneten Planfläche 4 und dem oberhalb der Ebene E verlaufenden Aussparungsbereich 6 zusammengesetzt, wie in den Figuren 5 und 6 zu erkennen ist. Die Höhe Z der Messerklinge 10 entspricht dem maximalen Abstand zwischen der Oberseite 1 und der Planfläche 4 in einer Normalenrichtung N zu der Ebene E, wie in Figur 7 dargestellt. Eine Oberfläche der Oberseite 1 ist wiederum aus einer in einer oberen Ebene OE (Figur 7) angeordneten oberen Planfläche 15 und einem außerhalb der oberen Ebene OE verlaufenden Oberseitenbereich 16 zusammengesetzt. Die Materialstärke M der Messerklinge 10 entspricht dem Abstand zwischen der Oberseite 1 und der Unterseite 2, welcher in Normalenrichtung N gemessen wird. Die Materialstärke M der Messerklinge 10 ist dabei zumindest bereichsweise geringer als die Höhe Z der Messerklinge 10, wie beispielhaft anhand einer Messstelle in der Figur 20 dargestellt. Die untere Ebene E und die obere Ebene OE sind vorzugsweise parallel zueinander ausgerichtet und um die Höhe Z der Messerklinge 10 zueinander beabstandet.

Die Planfläche 4 kann eine Fläche sein, deren Planarität, auch als Planizität bezeichnet, größer ist als bei dem Aussparungsbereich 6. Beliebige Punkte auf der Planfläche 4 sind also räumlich in der Ebene E angeordnet. Der Aussparungsbereich 6 bildet ebenfalls eine Fläche, die im Vergleich unebener, also gekrümmt oder gewölbt sein kann, so dass Punkte auf der Fläche des Aussparungsbereichs 6 räumlich in unterschiedlichen Ebenen angeordnet sind. Die Planfläche 4 umfasst eine Mehrzahl an Teilflächen. Im Bereich der Schneiden 3 der Messerklinge weist die Oberfläche der Unterseite 2 eine Teilfläche 4A der Planfläche 4 auf. An der Oberfläche der Unterseite 2 können unmittelbar an der im Bereich der Schneiden 3 angeordneten Teilfläche 4A Verschleißmarken 12 zur Bestimmung eines Verschleißes an der Schnittkante angeordnet sein. Eine weitere Teilfläche 4B der Planfläche 4 der Oberfläche der Unterseite 2 ist um die Ausnehmung 5 herum, in dem Randbereich 7 der Ausnehmung 5 angeordnet. An der Hinterkante 8 der Messerklinge sind an der Oberfläche der Unterseite 2 eine Mehrzahl von Teilflächen 4C der Planfläche 4 angeordnet. Schließlich ist noch eine Teilfläche 4D der Planfläche 4 in dem Befestigungsbereich 9 angeordnet.

An der Hinterkante 8 der Messerklinge an der Oberfläche der Oberseite 1 sind vorzugsweise mehrere obere Teilflächen 15C der oberen Planfläche 15 angeordnet, wobei die oberen Teilflächen 15C jeweils dem Aussparungsbereich 6 an der Hinterkante 8 auf der Unterseite 2 gegenüberliegend angeordnet sind. Die oberen Teilflächen 15C sind entlang der Hinterkante 8 jeweils von dem Oberseitenbereich 16 unterbrochen, wobei die Teilflächen 4C auf der Unterseite 2 jeweils dem Oberseitenbereich 16 gegenüberliegen, sodass die oberen Teilflächen 15C entlang der Hinterkante 8 abwechselnd mit den Teilflächen 4C auf der Unterseite 2 angeordnet sind. Dadurch lässt sich die Messerklinge 10 sowohl mit der Unterseite 2 dem Messerbalken (22, Figur 2) zugewandt, als auch mit der Oberseite 1 dem Messerbalken zugewandt montieren. Die verringerte Fläche an der Hinterkante 8, die sich aus der in Figur 7 erkennbaren Wellenform ergibt, verringert darüber hinaus vorteilhaft die Reibung gegenüber die Messerklinge 10 nach hinten abstützenden Führungselementen (nicht dargestellt).

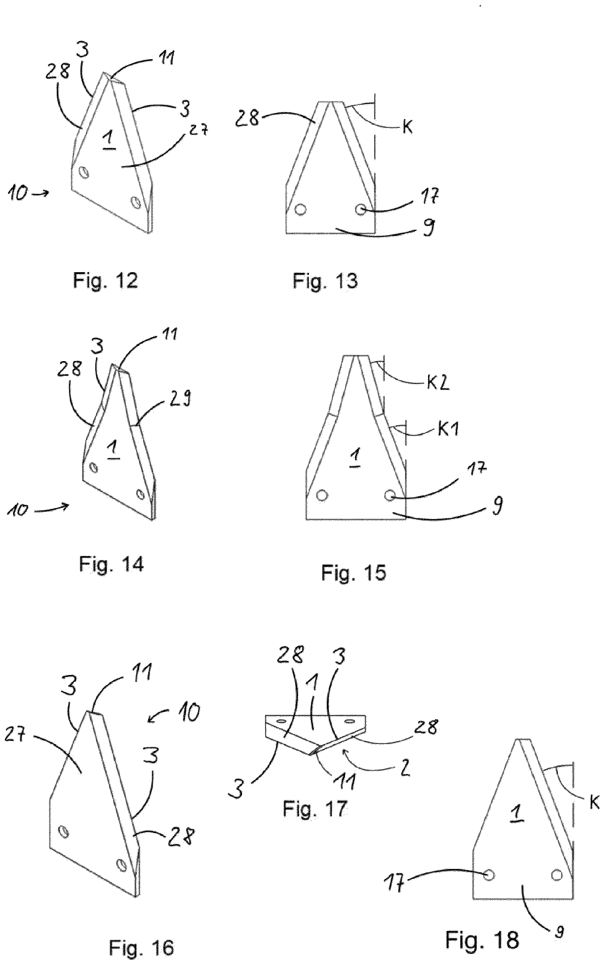

In den Figuren 12 und 13, die gemeinsam beschrieben werden, ist eine Variante der Messerklinge 10 in einer Seitenansicht und in einer perspektivischen Ansicht dargestellt. Die Darstellung ist schematisiert und dient der Erläuterung von Ausführungsformen der Schneiden 3. Merkmale der Oberflächen und der Hinterkante, wie in den Figuren 7 bis 11 dargestellt, sind hier nicht gezeigt, können aber mit den nachfolgend beschriebenen Merkmalen kombiniert werden. Die Messerklinge 10 gemäß der Figuren 12 und 13 weist den Schneidenabschnitt 27 mit zwei Schneiden 3 und den Befestigungsbereich 9 mit Löchern als Befestigungsmitteln 17 auf. Eine Schneidfase 28 jeder Schneide 3 ist nur auf der Oberseite 1 angeordnet. Die Schneidfasen 28 bilden am äußeren Rand mit der Unterseite 2 der Messerklinge die Schneidkante. Der Klingenwinkel K beträgt etwa 21 Grad, wobei das Ausführungsbeispiel dadurch nicht eingeschränkt ist. Vorzugsweise weist die Messerklinge 10 einen Klingenwinkel K zwischen 20 Grad und 27 Grad auf.

In den Figuren 14 und 15, die gemeinsam beschrieben werden, ist eine weitere Variante der Messerklinge 10 in einer Seitenansicht und in einer perspektivischen Ansicht dargestellt. Merkmale der Oberflächen und der Hinterkante, wie in den Figuren 7 bis 11 dargestellt, sind hier nicht gezeigt, können aber mit den nachfolgend beschriebenen Merkmalen kombiniert werden. Die Messerklinge 10 gemäß der Figuren 14 und 15 weist den Schneidenabschnitt 27 mit zwei Schneiden 3 und den Befestigungsbereich 9 mit Löchern als Befestigungsmitteln 17 auf. Die Schneidfasen 28 der Schneiden 3 sind nur auf der Oberseite 1 der Messerklinge 10 angeordnet und weisen jeweils eine Knickstelle 29 auf. Die Schneidfasen 28 bilden am äußeren Rand mit der Unterseite 2 der Messerklinge die Schneidkante. Ein erster Klingenwinkel K1 von beispielsweise 21 Grad ist weniger spitz als ein zweiter Klingenwinkel K2 von beispielsweise 15 Grad.

In den Figuren 16 bis 18, die gemeinsam beschrieben werden, ist eine weitere Variante der Messerklinge 10 in einer Seitenansicht und in einer perspektivischen Ansicht dargestellt. Merkmale der Oberflächen und der Hinterkante, wie in den Figuren 7 bis 11 dargestellt, sind hier nicht gezeigt, können aber mit den nachfolgend beschriebenen Merkmalen kombiniert werden. Die Messerklinge 10 gemäß der Figuren 14 und 15 weist den Schneidenabschnitt 27 mit zwei Schneiden 3 und den Befestigungsbereich 9 mit Löchern als Befestigungsmitteln 17 auf. Eine der Schneidfasen 28 ist auf der Oberseite 1 der Messerklinge 10 angeordnet und bildet am äußeren Rand mit der Unterseite 2 der Messerklinge 10 die Schneidkante, während die andere Schneidfase 28 auf der Unterseite 2 der Messerklinge 10 angeordnet ist und am äußeren Rand mit der Oberseite 1 der Messerklinge 10 die Schneidkante bildet. Die zwei Schneidkanten sind somit in Normalenrichtung versetzt in verschiedenen Ebenen angeordnet. Durch die zumindest teilweise Überlappung der Schneidfasen 28 im Bereich der Messerspitze 11 wird vorteilhafterweise eine schmalere Messerspitze 11 ermöglicht als bei der Messerklinge 10 gemäß Figur 12. Der Klingenwinkel K beträgt etwa 21 Grad, wobei das Ausführungsbeispiel dadurch nicht eingeschränkt ist. Vorzugsweise weist die Messerklinge 10 einen Klingenwinkel K zwischen 20 Grad und 27 Grad auf.

Die Figur 19 zeigt eine vergleichende Darstellung von Varianten von Messerklingen 10. Die mit 10A bezeichnete Messerklinge weist einen Klingenwinkel K von 21 Grad und eine Klingenteilung T von zwei Zoll auf, welche der Erstreckung der Messerklinge in Längsrichtung L (siehe Figur 5) entspricht. Die Messerklinge 10A ist nicht mit dem erfindungsgemäßen Schneidwerk verwendbar. Mit 10B ist die Messerklinge gemäß Figur 12 bezeichnet, die einen Klingenwinkel K von 21 Grad und eine Klingenteilung T von 2,4 Zoll, aufweist. Eine Länge LP des Schneidenabschnitts 27 in Arbeitsrichtung P ist bei gleichem Klingenwinkel K bei der Messerklinge 10B größer als bei der Messerklinge 10A. Mit 10D ist die Messerklinge gemäß Figur 16 bezeichnet, die einen Klingenwinkel K von 21 Grad und eine Klingenteilung T von 2,4 Zoll, aufweist. Wegen der Überlappung der Schneidfasen 28 im Bereich der Messerspitze 11 ist die Länge LP des Schneidenabschnitts 27 in Arbeitsrichtung P bei gleichem Klingenwinkel K bei der Messerklinge 10D größer als bei der Messerklinge 10B. Mit 10C ist die Messerklinge gemäß Figur 14 bezeichnet, die einen ersten Klingenwinkel K1 von 21 Grad und einen zweiten Klingenwinkel K2 von 15 Grad aufweist. Die Klingenteilung T beträgt 2,4 Zoll. Durch den spitzeren Klingenwinkel K2 ist die Länge LP des Schneidenabschnitts 27 in Arbeitsrichtung P größer als bei den Messerklingen 10B und 10D. Der spitzere zweite Klingenwinkel K2 führt zu einem ungünstigeren Schneidverhalten der Messerklinge 10C in diesem Bereich.

In der Figur 20 ist ein Diagramm zur vergleichenden Darstellung erreichbarer Fahrgeschwindigkeiten mit den Varianten der Messerklingen gemäß Figur 19 gezeigt. Auf der Abszisse 30 ist der Hub H in Millimeter angegeben. Auf der Ordinate 31 ist eine erreichbare Fahrgeschwindigkeit einer Erntemaschine dimensionslos angegeben. Kurvenverläufe 32, 33, 34 und 35 zeigen, dass die erreichbare Fahrgeschwindigkeit degressiv mit dem Hub H ansteigt, wobei die Ausprägung des jeweiligen Verlaufs von der Anzahl der Schnitte pro Hub und von der Form der Klinge abhängig ist. Um verschiedene Klingenformen vergleichbar zu machen, wurde die Belastung des Antriebs durch die Fliehkraft des Messers normiert.

Der mit Punkten dargestellte Kurvenverlauf 32 stellt den Zusammenhang von Fahrgeschwindigkeit zu Hub H bei einem Schnitt pro Hub dar. Der Punkt 36 im Kurvenverlauf 32 bezeichnet die erreichbare Fahrgeschwindigkeit mit einer vielfach verwendeten Messerklinge eines einfach schneidenden Referenzschneidwerks mit 3 Zoll Klingenteilung und einem Klingenwinkel von 30 Grad bei einem Hub H von etwa 3,33 Zoll oder 84,6 Millimeter, die nicht mit dem beanspruchten Schneidsystem verwendbar ist. Die erreichbare Fahrgeschwindigkeit des Referenzschneidwerks beträgt 100 Prozent.

Der mit kurzen Strichen dargestellte Kurvenverlauf 33 stellt den Zusammenhang von Fahrgeschwindigkeit zu Hub H bei zwei Schnitten pro Hub dar. Der Punkt 37 im Kurvenverlauf 33 bezeichnet die erreichbare Fahrgeschwindigkeit von 162 Prozent des Referenzschneidwerks mit einer vielfach verwendeten Messerklinge mit 2 Zoll Klingenteilung und einem Klingenwinkel K von 21 Grad bei einem Hub H von 4 Zoll oder 101,6 Millimeter, die als Vergleichsbeispiel genannt wird und nicht mit dem beanspruchten Schneidsystem verwendbar ist. Der Punkt 38 im Kurvenverlauf 33 bezeichnet die erreichbare Fahrgeschwindigkeit von 182 Prozent mit der Messerklinge 10B gemäß Figuren 12 und 19, die mit dem beanspruchten Schneidsystem verwendbar ist. Die Messerklinge 10B weist 2,4 Zoll als Klingenteilung T und einem Klingenwinkel K von 21 Grad bei einem Hub H von 4,8 Zoll oder 121,9 Millimeter auf. Wenn der Hub H in der Praxis weniger als das Zweifache der Klingenteilung beträgt, so liegt die erreichbare Fahrgeschwindigkeit entsprechend niedriger auf dem Kurvenverlauf 33.

Der mit langen Strichen und Punkten dargestellte Kurvenverlauf 34 stellt den Zusammenhang von Fahrgeschwindigkeit zu Hub H bei zwei Schnitten Schnitt pro Hub dar. Der Punkt 39 im Kurvenverlauf 34 bezeichnet die erreichbare Fahrgeschwindigkeit von 210 Prozent mit der mit dem beanspruchten Schneidsystem verwendbaren Messerklinge 10C gemäß Figuren 14 und 19, mit 2,4 Zoll Klingenteilung, einem ersten Klingenwinkel K1 von 21 Grad und einem zweiten Klingenwinkel K2 von 15 Grad bei einem Hub H von 4,8 Zoll oder 121,9 Millimeter dar. Wenn der Hub H in der Praxis weniger als das Zweifache der Klingenteilung beträgt, so liegt die erreichbare Fahrgeschwindigkeit entsprechend niedriger auf dem Kurvenverlauf 34.

Der mit mittellangen Strichen dargestellte Kurvenverlauf 35 stellt den Zusammenhang von Fahrgeschwindigkeit zu Hub H bei zwei Schnitten Schnitt pro Hub dar. Der Punkt 40 im Kurvenverlauf 35 bezeichnet die erreichbare Fahrgeschwindigkeit von 196 Prozent der mit dem beanspruchten Schneidsystem verwendbaren Messerklinge 10D gemäß Figuren 16 und 19, mit 2,4 Zoll Klingenteilung und einem Klingenwinkel von 21 Grad bei einem Hub H von 4,8 Zoll oder 121,9 Millimeter dar. Die erreichbare Fahrgeschwindigkeit ist geringer als mit der Messerklinge 10C, deren spitzer Klingenwinkel K2 von 15 Grad jedoch zu einem schlechteren Schnittverhalten führt. Wenn der Hub H in der Praxis weniger als das Zweifache der Klingenteilung beträgt, so liegt die erreichbare Fahrgeschwindigkeit entsprechend niedriger auf dem Kurvenverlauf 35.

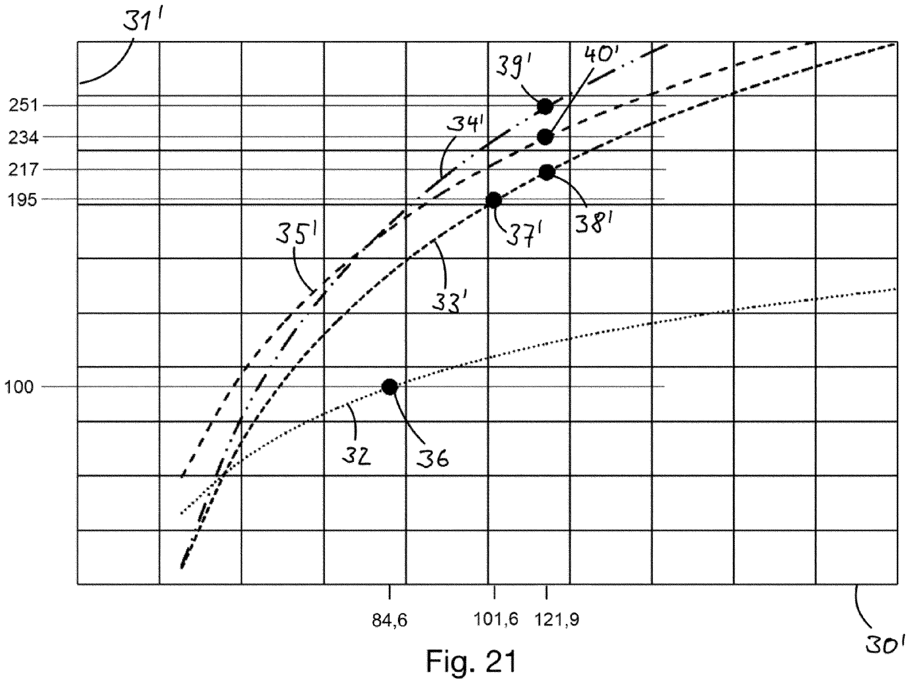

In der Figur 21 ist ein weiteres Diagramm zur vergleichenden Darstellung der erreichbaren Fahrgeschwindigkeiten mit den Varianten der Messerklingen gemäß Figur 19 gezeigt. Auf der Abszisse 30' ist der Hub H in Millimeter angegeben, wobei die jeweiligen Hübe H identisch mit denen der Figur 20 sind. Auf der Ordinate 31' ist eine erreichbare Fahrgeschwindigkeit dimensionslos angegeben. Die Belastung des Antriebs ist für alle dargestellten Varianten gleich, so dass ein relativer Vergleich möglich ist. Für die Kurvenverläufe 33`, 34' und 35' der Messerklingen gemäß Figur 19 ist eine Massereduktion von 30 Prozent gegenüber den entsprechenden Kurvenverläufen 33, 34, 35 in Figur 20 berücksichtigt. Der Kurvenverlauf 32 des Referenzsystems ist unverändert. Der Punkt 36 im Kurvenverlauf 32 bezeichnet die erreichbare Fahrgeschwindigkeit des einfach schneidenden Referenzschneidwerks von 100 Prozent.

Der Punkt 37' im Kurvenverlauf 33` bezeichnet die erreichbare Fahrgeschwindigkeit von 195 Prozent mit der nicht mit dem beanspruchten Schneidsystem verwendbaren Messerklinge 10A gemäß Figur 19, unter Berücksichtigung der Massereduktion von 30 Prozent bei ansonsten identischen Parametern. Der Punkt 38' im Kurvenverlauf 33` bezeichnet die erreichbare Fahrgeschwindigkeit von 217 Prozent mit der Messerklinge 10B gemäß Figuren 12 und 19, unter Berücksichtigung der Massereduktion von 30 Prozent bei ansonsten identischen Parametern. Der Punkt 39' im Kurvenverlauf 34` bezeichnet die erreichbare Fahrgeschwindigkeit von 251 Prozent mit der Messerklinge 10C gemäß Figuren 14 und 19, unter Berücksichtigung der Massereduktion von 30 Prozent bei ansonsten identischen Parametern. Der Punkt 40 im Kurvenverlauf 35' bezeichnet die erreichbare Fahrgeschwindigkeit von 234 Prozent der Messerklinge 10D gemäß Figuren 16 und 19, unter Berücksichtigung der Massereduktion von 30 Prozent bei ansonsten identischen Parametern. Wenn der Hub H in der Praxis weniger als das Zweifache der Klingenteilung T beträgt, so liegt die erreichbare Fahrgeschwindigkeit entsprechend niedriger auf dem jeweiligen Kurvenverlauf 33`, 34`, 35`.

### Bezugszeichenliste

- 1: Oberseite
- 2: Unterseite
- 3: Schneide
- 4: Planfläche
- 4A: Teilflächen der Planfläche
- 4B: Teilflächen der Planfläche
- 4C: Teilflächen der Planfläche
- 4D: Teilflächen der Planfläche
- 5: Ausnehmungen
- 6: Aussparungsbereich
- 7: Randbereich der Ausnehmung
- 8: Hinterkante der Messerklinge
- 9: Befestigungsbereich
- 10: Messerklingen
- 11: Messerspitze
- 12: Verschleißmarken
- 14: Messer
- 14': Referenzmesser
- 15: Obere Planfläche
- 15C: Obere Teilflächen der oberen Planfläche an der Hinterkante
- 16: Oberseitenbereich
- 17: Befestigungsmittel, Loch
- 18: Mähfinger
- 19: Fingerbalken
- 20: Fingerspitze
- 21: Antrieb
- 22: Messerschiene, Messerrücken
- 25: Verbindungsabschnitt
- 26: Befestigungselement, Schraube, Mutter
- 27: Schneidenabschnitt
- 28: Schneidfase
- 29: Knickstelle
- 30, 30': Abszissen
- 31, 31': Ordinaten
- 32-35: Kurvenverläufe
- 33`-35`: Kurvenverläufe
- 36-40: Punkte
- 37'-40': Punkte
- L: Längsachse
- H: Hub
- T: Teilung
- A: Abstand
- C: Mittellinie
- Href: Referenzhub
- Tref: Referenzteilung
- Aref: Referenzabstand
- OE: Obere Ebene
- E: Ebene
- N: Normalenrichtung
- Z: Höhe der Messerklinge
- P: Arbeitsrichtung
- M: Materialstärke
- K: Klingenwinkel
- K1: Erster Klingenwinkel
- K2: Zweiter Klingenwinkel
- LP: Länge des Schneidenabschnitts in Arbeitsrichtung

## Patentansprüche

1. Schneidsystem für ein Schneidwerk einer Landmaschine, umfassend
- einen Fingerbalken (19) mit daran befestigten Mähfingern (18);
- ein Messer (14) mit an einer Messerschiene (22) befestigten Messerklingen (10), wobei das Messer relativ zu dem Fingerbalken hin und hergehend geführt ist, wobei die Messerklingen eine Klingenteilung T aufweisen und wobei das Messer eine hin und hergehende Bewegung mit einem Hub H ausführt,
wobei der Hub H mindestens dem eineinhalbfachen der Klingenteilung T entspricht und wobei die Klingenteilung T einen Wert zwischen 58,5 Millimeter und 63,5 Millimeter aufweist.

2. Schneidsystem nach Anspruch 1, **dadurch gekennzeichnet, dass** die Klingenteilung T einen Wert von 61 Millimeter oder 2,4 Zoll aufweist, wobei der Hub H um einen Faktor zwischen 1,9 und 2,1 größer als die Klingenteilung T ist.

3. Schneidsystem nach einem der vorhergehenden Ansprüche, **dadurch gekennzeichnet, dass** das Messer bezogen auf seine Länge entlang einer Längsachse (L) eine Masse M von weniger als 20 g/cm aufweist, insbesondere von weniger als 18 g/cm und besonders bevorzugt von weniger als 16 g/cm.

4. Schneidsystem nach einem der vorhergehenden Ansprüche, **dadurch gekennzeichnet, dass** die Messerklingen (10) jeweils eine Mittellinie (C) aufweisen, wobei die Messerklingen entlang einer Längsachse (L) des Schneidsystems nebeneinander angeordnet sind, wobei die Klingenteilung T als ein Abstand zwischen den Mittellinien benachbarter Messerklingen definiert ist.

5. Schneidsystem nach Anspruch 4, **dadurch gekennzeichnet, dass** die Mähfinger (18) jeweils eine Fingerspitze (20) aufweisen, wobei die Mähfinger entlang der Längsachse (L) nebeneinander angeordnet sind, wobei die Mähfinger zueinander jeweils in einem Abstand A angeordnet sind, wobei der Abstand A als ein Abstand zwischen den Fingerspitzen definiert ist, wobei der Abstand A insbesondere der Klingenteilung T entspricht, und wobei die Mähfinger in mindestens zwei Varianten unterschiedlicher Fingerlänge in Arbeitsrichtung vorgesehen sind.

6. Schneidsystem nach einem der vorhergehenden Ansprüche, **dadurch gekennzeichnet, dass** ein Antrieb (21) das Messer (14) antreibt, wobei eine Drehzahl des Antriebs zwischen 450 und 750 Umdrehungen pro Minute beträgt und wobei das Messer je Umdrehung des Antriebs eine hin und hergehenden Bewegung mit dem Hub H ausführt.

7. Schneidsystem nach Anspruch 6, **dadurch gekennzeichnet, dass** eine Belastung des Antriebs (21) durch eine Fliehkraft des Messers (14) bei einer Drehzahl des Antriebs von 90 Prozent einer Drehzahl eines Antriebs eines Referenzschneidsystems kleiner oder gleich der Belastung des Antriebs (21) durch die Fliehkraft eines Referenzmessers des Referenzschneidsystems ist, wobei das Referenzschneidsystem folgende Parameter aufweist:
- eine Klingenteilung Tref von 76,2 Millimeter oder 3 Zoll,
- ein Abstand Aref der Mähfinger, der der Klingenteilung Tref entspricht,
- ein Hub Href von 84,6 Millimeter oder 3,33 Zoll,
wobei das Referenzmesser bezogen auf seine Länge entlang der Längsachse (L) eine Masse Mref von mindestens 21 g/cm aufweist, insbesondere von 22,33 g/cm oder 1,5 lb/ft.

8. Schneidsystem nach einem der vorhergehenden Ansprüche, **dadurch gekennzeichnet, dass** die Messerklingen (10) eine Oberseite (1) und eine Unterseite (2) aufweisen, wobei die Messerklingen an der Messerschiene (22) sowohl mit der Messerschiene zugewandter Oberseite, als auch mit der Messerschiene zugewandter Unterseite befestigbar sind, wobei die Messerklingen (10) an der Messerschiene (22) insbesondere im Wechsel mit der Messerschiene (22) zugewandter Oberseite (1) und mit der Messerschiene zugewandter Unterseite (2) befestigt sind.

9. Schneidsystem nach Anspruch 8, **dadurch gekennzeichnet, dass** eine Oberfläche der Unterseite (2) aus einer in einer Ebene (E) angeordneten Planfläche (4) und einem oberhalb der Ebene verlaufenden Aussparungsbereich (6) zusammengesetzt ist, wobei eine Höhe der Messerklinge (10) einem maximalen Abstand (Z) zwischen der Oberseite und der Planfläche in einer Normalenrichtung (N) zu der Ebene entspricht.

10. Schneidsystem nach Anspruch 9, **dadurch gekennzeichnet, dass** eine Materialstärke der Messerklinge (10) zumindest bereichsweise geringer ist als die Höhe (H) der Messerklinge, wobei die Materialstärke der Messerklinge einem Abstand zwischen der Oberseite (1) und der Unterseite (2) entspricht.

11. Schneidsystem nach einem der vorhergehenden Ansprüche, **dadurch gekennzeichnet, dass** die Messerklingen (10) einen Klingenwinkel (K) zwischen 20° und 27° aufweisen.

12. Schneidsystem nach Anspruch 11, **dadurch gekennzeichnet, dass** der Klingenwinkel etwa 21° beträgt.

13. Schneidsystem nach einem der vorhergehenden Ansprüche, **dadurch gekennzeichnet, dass** die Messerklingen (10) abschnittsweise eine ersten Klingenwinkel (K1) und abschnittsweise einen von dem ersten Klingenwinkel (K1) verschiedenen zweiten Klingenwinkel (K2) aufweisen.

14. Schneidsystem nach einem der vorhergehenden Ansprüche, **dadurch gekennzeichnet, dass** die Messerklingen (10) eine Oberseite (1) und eine Unterseite (2) aufweisen, wobei zwei Schneidfasen (28) vorgesehen sind und wobei eine der Schneidfasen auf der Oberseite und die andere Schneidfase auf der Unterseite angeordnet ist.

15. Schneidsystem nach Anspruch 14, **dadurch gekennzeichnet, dass** die Schneidfasen (28) sich im Bereich einer Messerspitze (11) vollständig überlappen.
